# EUROPEAN PATENT APPLICATION

(11) **EP 2 870 853 A1**
(43) Date of publication of application: **13.05.2015**
(21) Application number: 13192301.3
(22) Date of filing: 11.11.2013
(51) Int. Cl.: A01D 34/00

(54) **Lawn mower with remote control**

(71) Applicant: Honda Research Institute Europe GmbH, 63073 Offenbach/Main (DE)
(72) Inventor: Einecke, Nils, 63073 Offenbach (DE); Franzius, Mathias, 63073 Offenbach (DE); Dirnberger, Roman, 63073 Offenbach (DE); Borsdorf, Ronny, 63073 Offenbach (DE)
(74) Representative: Rupp, Christian

(57) **Abstract**

The invention proposes an autonomous robot (1), such as an autonomous lawn mower, comprising:
- at least one camera (2) for obtaining at least one input image,
- a communication interface (3) for transmitting the input image and receiving a remote control instruction,
- a control unit (4) for controlling an operation of the autonomous robot (1),
wherein the control unit (4) is adapted to control the operation at the autonomous robot (1) in response to the received remote control instruction.

## Description

The present invention relates to a system and method related to an autonomous robot like an autonomous mower, e.g. lawn mower, and to the control of the robot. In particular the present invention relates to a lawn mower and a system for supporting remote control of the lawn mower by e.g. a user via a remote smart device.

Autonomous or robotic mowers, e.g. lawn mowers, are an increasing market. Such mowers typically mow a lawn autonomously in a random brute-force fashion cutting only small pieces of grass in every run. Small grass pieces fall into the sod, thereby fertilizing the lawn. This principle is called mulching.

The term "autonomous mower" is well known to those skilled in the art and refers to an unmanned mower which has an autonomous drive unit in order to move the mower ("self-driving mower"), an onboard energy reservoir to power the drive unit, one sensor and a computing unit functionally connected to the sensor(s) and the drive unit. The lawn mower also comprises one or more blades for cutting grass and a corresponding control unit for controlling the blades.

In many approaches of autonomous lawn mowers the mowing area is delimited by an electric border wire, which emits a weak electromagnetic field. This field is used by the autonomous mower to stay within the allowed mowing area, and to find a docking or base station for recharging. For avoiding static or dynamic obstacles that are not indicated by the border wire, some commercially available autonomous mowers use bump and sonar sensors.

WO 2010/077198 A1 describes an autonomous robotic lawn mower and a method for establishing a wireless communication link between the lawn mower and a user. A border-wire-based robotic mower is disclosed and is able to communicate with a mobile terminal of the user via one or more radio based stations of a cellular network structure. The cellular network can be used to send different types of messages between the robotic lawn mower and the mobile terminal of the user, such as information messages about the battery load of the lawn mower. As a response to such an information message, the user may send an acknowledgement message over the network. The communication between lawn mower and user is thereby limited to the communication information messages and acknowledgement messages.

US 2010/0324731 A1 describes a method for establishing a desired area of confinement for an autonomous robot and autonomous robot implementing a control system for executing the same. An interaction between a user and the lawn mower via a smart phone or a similar device is disclosed. First, a map generated means of perimeter information can be displayed on the smart phone. Second, the lawn mower may be remotely controlled via the smart phone. Third, the docking station designed for use with the lawn mower acts as a communication gateway between the lawn mower and the smart phone. Thereby, the communication between the lawn mower and the smart phone is limited to the transmission of map information to the user.

US 6,611,738 B2 describes a mobile device including a module for performing robotic mowing. The lawn mower is capable of detecting a position via GPS signals, generating a map from these signals and using the map to keep the mower within a defined region. The lawn mower is adapted to park at a fixed docking station, and also to communicate with a user via a wireless link that interfaces with the Internet. A message like an email can be sent from the lawn mower to the user, wherein said message comprises a printout of a map or a status report. Thereby, the lawn mower can send information to the docking station via respective wireless transceivers, the docking station having a wired connection to the Internet. Additionally, the lawn mower can be controlled by the user over the Internet. The communication is thereby limited to the transmission of map information based on GPS signals to the user.

A problem encountered by such known remote control systems based on a communication between the lawn mower and the user device lies in the fact that remote controlling a lawn mower can be difficult if the lawn mower is far away from the user i.e. from the user device. Map information may e.g. not be sufficient for the user to control remotely the lawn mower.

The state of the art proposes solutions for the lawn mower to inform the user about problems encountered during mowing. However, there may be cases in which the user cannot resolve the encountered problem. The lawn mower may e.g. send a message that it has run into obstacles or that it has become stuck somewhere. If the user is not present in the garden, it may be difficult for him to send appropriate remote control instructions for manoeuvring the lawn mower since the user does not know why exactly the problem occurred.

In view of the above-mentioned disadvantages of known autonomous mowers, the present invention is intended to improve the state of the art. A particular aim of the present invention is to provide images to a remote smart device of the user, like a smart phone, a tablet or any other user device. The lawn mower can stream camera images to the remote smart device to improve remote control and particularly to help the user to understand the situation of the mower.

The invention is particularly directed to an autonomous lawn mower that can stream a video signal or also transmit one or several images to the remote smart device of the user.

As such, the remote control of the lawn mower is improved due to the camera view. The user can easily understand a reported problem, e.g. that the mower has become stuck somewhere, and might be able to solve this problem without being physically present. With the further input obtained from the received image, images or video, the user may appropriately use the remote control to move the lawn mower out of a difficult situation.

It is also optionally proposed that the lawn mower streams the video or transmit the image/images via Wi-Fi, a technology for devices to exchange data or connect to the Internet wirelessly using radio waves. The transmission can also be carried out via Bluetooth, a technology for wirelessly exchanging data over short distances between devices, or via a mobile network.

Thereby, the user can e.g. install a software application like a mobile application, also called or mobile app, on the remote smart device that is preferably a smart phone, a tablet computer, or alternatively another mobile device. Also a software application, e.g. a mobile application, can be installed into the lawn mower. The respective mobile application is then responsible for information exchange, remote control of the lawn mower, and video streaming or image transmission.

The present invention and the above-mentioned advantages are realized by an autonomous robot, a remote smart device, a software, a system and a method according to the independent claims of this invention. The dependent claims further develop the core idea of the invention, and realize further advantages.

According to a first aspect of the invention a autonomous robot is proposed, such as an autonomous lawn mower. The autonomous robot comprises at least one camera for obtaining at least one input image, a communication interface for transmitting the input image and receiving a remote control instruction, and a control unit for controlling an operation of the autonomous robot. The control unit is adapted to control the operation at the autonomous robot in response to the received remote control instruction.

The control of the operation of the robot in response to the remote control instruction means that the control unit interprets the instruction and operates the robot accordingly. The image that is obtained is captured by the image.

The communication interface is particularly adapted to transmit the input image to a remote smart device and to receive a remote control instruction from the remote smart device.

Advantageously, the camera is adapted to obtain an image of the surroundings of the autonomous robot as an input image.

The control unit is connected to the camera so as to control the operation of the camera.

Advantageously, the camera and the communication interface are adapted to obtain and transmit a sequence of input images, preferably in the form of a video or moving image.

Advantageously, the input image obtained from the camera is transmitted by the communication interface in real-time, preferably in the form of a live streaming in which input images obtained from the camera are continuously transmitted in real-time by the communication interface.

Advantageously, the autonomous robot comprises compressing means for compressing the obtained at least one input image, wherein, if a sequence of input images is obtained, the compressing means are adapted to compress the sequence of input images preferably according to the Motion JPEG standard.

The compressing means can be part of the camera, of the communication interface or can be in the form of a separate dedicated unit located in the autonomous lawn mower e.g. in a data path between the camera and the communication interface.

Such a sequence of input images can be compressed by means of a standardized video compression format. A preferred format is Motion JPEG, wherein this format advantageously allows for a low latency. Other video compression formats can be used like MJPEG, MPEG-1, MPEG-2 Part 2, MPEG-4 Part 2, or H.264.

In case an individual input image is obtained and transmitted to the remote smart device, the input image is compressed according to a standardized image file format before transmission. Such an image file format can be a raster format like JPEG/JFIF, JPEG 2000, Exif, TIFF, RAW, GIF, BMP, or PNG. Alternatively, a vector format can be utilized like CGM or SVG.

Advantageously, the communication interface is also adapted to transmit a message, e.g. in the form of a text message, together with the input image, wherein the message preferably describes a problem encountered by the autonomous robot.

The autonomous robot thus can send the image/images together with a message reflecting the situation of the robot, e.g. that the robot cannot move anymore because it has become stuck or has run into an obstacle. Such a message can be understood as being an error message or fault message. Advantageously, the user receiving such a message even better understands the state of the autonomous robot and e.g. the problem encountered by the robot.

Other examples of error messages comprise messages that the robot is trapped or has left a given working area delimiting the area in which the robot can move or manoeuvre. In the case of an autonomous lawn mower, the working area corresponds to the mowing area mentioned above.

Such a message transmitted together with the input image can be a status message specifying a battery load of the autonomous lawn mower, the autonomous lawn mower thereby comprising a battery, or specifying the time left until the battery has to be reloaded.

The message is preferably generated by the control unit of the autonomous robot after having received and evaluated corresponding feedback information from e.g. sensors within the autonomous robot.

Advantageously, the autonomous robot comprises a microphone for obtaining an input sound preferably of the surroundings of the autonomous robot. The communication interface is adapted to transmit synchronously the input sound and the input image. The microphone here records the sound.

The user thus can even better understand the state or problem of the autonomous robot, and send appropriate remote control instructions to the robot.

The input image and the input sound is preferably transmitted synchronously, i.e. the input sound obtained by the microphone at a given time t is transmitted together with the input image obtained by the camera at said given time t. In case an individual input image is captured and sent to the remote smart device, it is proposed that the lawn mower 1 transmits simultaneously the input image and a piece of sound recorded at the time the image has been captured. In this case, the piece of sound is advantageously of limited duration, preferably of at least a few seconds such that the user can e.g. understand the problem of the lawn mower when listening to the input sound and simultaneously looking at the input image reproduced by the remote smart device.

In case also audio data, i.e. a sound, have to be transmitted together with the input image or images, the compressing means are adapted to support also audio compression.

Advantageously, the autonomous robot comprises moving means for moving the autonomous robot, the moving means preferably comprising driving and steering means, wherein the control unit is adapted to control the operation of the moving means in response to the received remote control instruction.

Advantageously, the autonomous robot comprises working means with at least one tool, wherein the control unit is adapted to control the operation of the working means in response to the received remote control instruction.

Advantageously, the control unit is adapted to activate or deactivate the working means in response to the received remote control instruction.

Advantageously, the control unit is adapted to modify a working parameter of the tool.

Advantageously, the autonomous robot is an autonomous lawn mower and the working means comprises a tool in the form of blades. The control unit is adapted to control the rotation speed of the blades and/or the height of the blades with respect to a frame of the autonomous robot or with respect to a surface on which the autonomous robot is working.

Advantageously, the control unit is adapted to control a parameter of the camera, such as the exposure, aperture, shutter, hue, zoom or focus, or to control the orientation of the camera.

The orientation of the camera thereby refers to the position of the camera with respect to the autonomous robot or autonomous lawn mower, i.e. with respect to the frame of the autonomous robot.

In addition thereto or alternatively, the orientation of the camera may refer to the direction in which the camera is pointing, i.e. in the direction in which the input image is taken by the camera. This direction in which the camera is pointing may be defined preferably with respect to the autonomous robot, for example in form of an angular position with respect to a main driving direction of the autonomous robot. This angular position may be two dimensional according to for example a plane parallel to the surface on which the lawn mower is working. This angular position may also be expressed in a three dimensional way.

As an alternative to the camera position with respect to the lawn mower, the orientation of the lawn mower may also correspond to the cardinal direction (north, east, south and west) of the camera direction. Advantageously, a further parameter can be added to the cardinal direction in order to define the angle of the camera direction with respect to the surface on which the lawn mower is working so as to define a three-dimensional direction.

Advantageously, the communication interface comprises means for establishing a wireless connection with the remote smart device, so as to allow the communication interface to transmit the input image and receive the remote control instruction over this wireless connection.

Advantageously, the communication interface comprises means for establishing a wireless connection in the form of a direct or ad hoc connection with the remote smart device. Alternatively, the communication interface is adapted to establish a wireless connection with a wireless access point of a wireless network.

Advantageously, the communication interface is adapted to establish a direct wireless connection, for example via Bluetooth, or to establish a wireless connection to a wireless access point preferably via WIFI.

Advantageously, the communication interface is adapted to establish a connection to a mobile cellular network for sending the input image and receiving the remote control instruction.

The remote smart device is thereby connected to the mobile cellular network and communicates with the autonomous robot via said mobile cellular network.

Advantageously, the autonomous robot is a gardening tool like a lawn mower or a fertilizing robot, or a cleaning robot like a vacuum cleaner or washing, waxing, polishing or shampooing robot.

According to a further aspect of the invention a remote smart device is proposed for operating an autonomous robot, such as an autonomous lawn mower. The remote smart device comprises a communication interface for receiving an input image, a display for displaying the input image, and input means for allowing a user to input or select a remote control instruction. The communication interface is adapted to transmitting the remote control instruction inputted or selected via the input means.

The input image is preferably received from an autonomous robot and the remote control instruction is preferably transmitted to the autonomous robot.

The display is optionally adapted to display also the message transmitted by the autonomous robot.

The remote smart device also comprises compressing means that are adapted to the received input image, and to the received input sound, if present.

The remote smart device optionally comprises means for reproducing the input sound, if present.

The remote control instruction is preferably adapted to control the operation at the autonomous robot. Preferably the remote control instruction is interpreted by the control unit of the autonomous robot and the control unit controls the operation at the autonomous robot in response to the received remote control instruction.

The remote control instruction may correspond, as mentioned above, to an instruction regarding the moving means of the autonomous robot, and preferably regarding the driving (move forward or backward) and steering (turn left or right) means. The remote control instruction may also relate to the working means and e.g. the tool, e.g. activate or deactivate the working means or modify a working parameter of the tool. The remote control instruction may also relate to a parameter of the camera, such as the exposure, aperture, shutter, hue, zoom or focus, or to control the orientation of the camera.

According to a further aspect of the invention a software program product in the form of e.g. a mobile application is proposed. The software program product is adapted to be installed on a remote smart device for operating an autonomous robot, such as an autonomous lawn mower. The software program product is adapted to control a communication interface for receiving an input image, a display for displaying the input image, and input means for allowing a user to input or select a remote control instruction. Therein the software program product is adapted to control the communication interface so as to transmit the remote control instruction inputted or selected via the input means.

According to a further aspect of the invention a method for operating an autonomous robot, such as an autonomous lawn mower, is proposed. The autonomous robot comprises at least one camera, a communication interface and a control unit. The method comprises the following steps. The camera obtains at least one input image. The communication interface transmits the input image, preferably to a remote smart device, and receiving a remote control instruction, preferably from the remote smart device. The control unit controls an operation of the autonomous robot in response to the received remote control instruction.

According to a further aspect of the invention a system is provided comprising the autonomous robot and the remote smart device.

Preferably all aspects defined above with respect to the autonomous robot are also provided for the remote smart device, the software program product, the system, and the method.

To summarize, it is proposed an autonomous lawn mower with camera and remote control means that transmits image or video signals to user smart phone or similar device for giving the user an impression of the lawn mower surroundings.

Advantageously, the mower sends image or video stream together with a message, e.g. the message "Mower is stuck", to better explain to the user the problem or state of mower. The streaming can be done via WIFI, Bluetooth or a mobile network like LTE. Preferably, the use of the mjpg (Motion jpg) codec is proposed for streaming, because of low latency. The user can install a corresponding app or mobile application, for remote control based on video stream. The invention applies to an autonomous lawn mower but also to other gardening tools.

In the following, the present invention will be explained in detail with reference to the attached drawing.

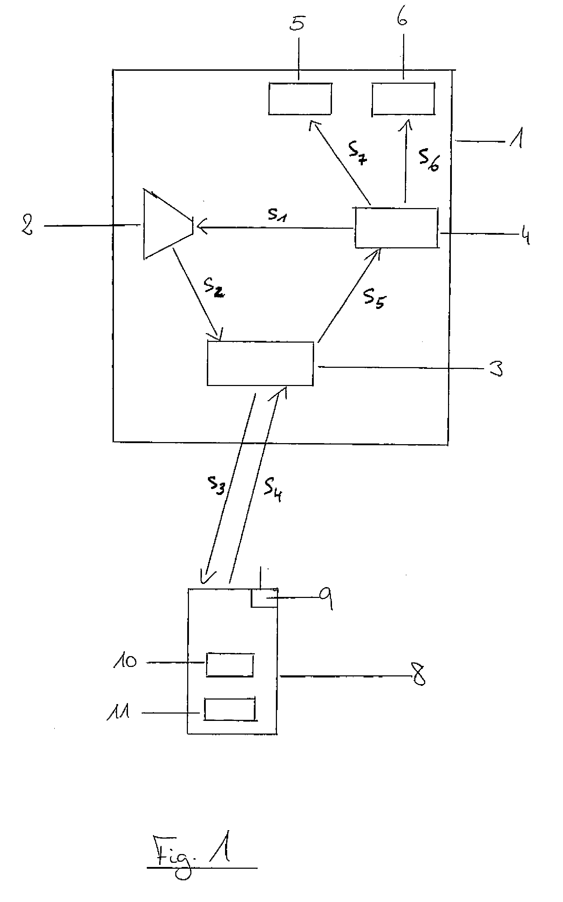

Fig. 1 schematically illustrates a system for remote control of an autonomous robotic lawn mower, the system comprising the lawn mower and a remote smart device.

Fig. 1 shows a schematic illustration of the mower 1 of the present invention. The mower 1 has at least one camera 2, which obtains a camera image (input image). The mower 1 can also be equipped with more than one camera 2. The camera 2 can be any kind of optical camera (e.g. visible light camera, infrared camera or the like). The mower 1 can also be equipped with different kinds of cameras 2. Preferably, the camera 2 can be controlled S1 by a control unit 4 of the mower 1, so as to adjust given parameters of the camera like zoom or camera direction.

The at least one camera 2 transmits S2 captured input images to a communication interface 3 adapted to transmit S3 the input images to a remote smart device 8. The remote smart device 8 comprises a communication interface 9 for receiving S3 the input images, and displays said images on a display 10. With a user interface 11, a user can then react to the displayed images by choosing or selecting or entering a command in the form of a remote control instruction via the user interface. The remote control instruction is transmitted S4 back to the mower 1 via the communication interface 9.

The mower receives the remote control instruction via its communication interface 3 that forwards S5 said remote control instruction to the control unit 4. The control unit 4 then interprets the received remote control instruction and operates the mower 1 accordingly. For example, the control unit 4 can operate S6 a working means 6 comprising a tool. In the specific case of the lawn mower, the tool corresponds to the blades of the mower. The control unit 4 can also operate S7 moving means 5 for moving or maneuvering the mower 1, or can operate S1 the camera 2. The control S6, S7, S1 thereby depends on the received remote control instruction. E.g. if the remote control instruction comprises a command to drive forwards at a given speed, the control unit 4 will operate the moving means S5 accordingly.

The remote smart device 8 is advantageously a mobile or hand-held terminal such as a smart phone, a tablet computer, a laptop, a personal digital assistant or another mobile device. Alternatively, the remote smart device 8 may also be a fixed device, such as a personal computer, a desktop or a workstation, that is equipped with a wireless network interface for enabling wireless communication.

The autonomous lawn mower 1 is only one example of an autonomous robot of the present invention. Such an autonomous robot generally refers to an unmanned mobile robot having an autonomous drive unit in order to move the robot ("self-driving mower"), an onboard energy reservoir to power the drive unit, one or more sensors and a control unit for controlling the robot. The autonomous robot performs repetitive operations or tasks over a defined work area, and can thus also refer to an autonomous floor maintenance device like vacuum cleaner or an appliance for washing, waxing or polishing. The robot can also comprise means for e.g. shampooing a carpet, for painting surfaces, or can be a gardening tool for e.g. fertilizing cultivation. These means for cleaning, shampooing or e.g. painting correspond to the working means 6 and can be operated by the control unit 4 according to a given remote control instruction received from the remote smart device 8.

## Claims

1. Autonomous robot (1), such as an autonomous lawn mower, comprising:
- at least one camera (2) for obtaining at least one input image,
- a communication interface (3) for transmitting the input image and receiving a remote control instruction,
- a control unit (4) for controlling an operation of the autonomous robot (1),
wherein the control unit (4) is adapted to control the operation at the autonomous robot (1) in response to the received remote control instruction.

2. Autonomous robot according to claim 1,
wherein the camera (2) is adapted to obtain an image of the surroundings of the autonomous robot (1) as an input image.

3. Autonomous robot (1) according to any of the preceding claims,
wherein the camera (2) and the communication interface (3) are adapted to obtain and transmit a sequence of input images, preferably in the form of a video or moving image.

4. Autonomous robot (1) according to any of the preceding claims,
wherein the input image obtained from the camera (2) is transmitted by the communication interface (3) in real-time, preferably in the form of a live streaming in which input images obtained from the camera (2) are continuously transmitted in real-time by the communication interface (3).

5. Autonomous robot (1) according to any of the preceding claims,
comprising compressing means for compressing the obtained at least one input image,
wherein, if a sequence of input images is obtained, the compressing means are adapted to compress the sequence of input images preferably according to the Motion JPEG standard.

6. Autonomous robot (1) according to any of the preceding claims,
wherein the communication interface (2) is also adapted to transmit a message, e.g. in the form of a text message, together with the input image,
wherein the message preferably describes a problem encountered by the autonomous robot (1).

7. Autonomous robot (1) according to any of the preceding claims,
comprising a microphone for obtaining an input sound preferably of the surroundings of the autonomous robot (1),
wherein the communication interface (3) is adapted to transmit synchronously the input sound and the input image.

8. Autonomous robot (1) according to any of the preceding claims,
comprising moving means (5) for moving the autonomous robot, the moving means preferably comprising driving and steering means,
wherein the control unit (4) is adapted to control the operation of the moving means (5) in response to the received remote control instruction.

9. Autonomous robot (1) according to any of the preceding claims,
comprising working means (6) with at least one tool,
wherein the control unit (4) is adapted to control the operation of the working means (6) in response to the received remote control instruction.

10. Autonomous robot (1) according to claim 9,
wherein the control unit (4) is adapted to activate or deactivate the working means (6) in response to the received remote control instruction.

11. Autonomous robot (1) according to any of the preceding claims 9 to 10,
wherein the control unit (4) is adapted to modify a working parameter of the tool.

12. Autonomous robot (1) according to any of the preceding claims 9 to 11,
werein the autonomous robot (1) is an autonomous lawn mower and the working means (6) comprises a tool in the form of blades, and
werein the control unit (4) is adapted to control the rotation speed of the blades and/or the height of the blades with respect to a frame of the autonomous robot or with respect to a surface on which the autonomous robot (1) is working.

13. Autonomous robot (1) according to any of the preceding claims,
wherein the control unit (4) is adapted to control a parameter of the camera (2), such as the exposure, aperture, shutter, hue, zoom or focus, or to control the orientation of the camera (2).

14. Autonomous lawn mower (1) according to any of the preceding claims,
wherein the communication interface (3) comprises means for establishing a wireless connection with the remote smart device (8), so as to allow the communication interface (3) to transmit the input image and receive the remote control instruction over this wireless connection.

15. Autonomous robot (1) according to claim 14,
wherein the communication interface (3) comprises means for establishing a wireless connection in the form of a direct or ad hoc connection with the remote smart device, or
wherein the communication interface (3) is adapted to establish a wireless connection with a wireless access point of a wireless network.

16. Autonomous robot (1) according to claim 14 or 15,
wherein the communication interface (3) is adapted to establish a direct wireless connection, for example via Bluetooth, or to establish a wireless connection to a wireless access point preferably via WIFI.

17. Autonomous robot (1) according to any of the preceding claims,
wherein the communication interface (3) is adapted to establish a connection to a mobile cellular network for sending the input image and receiving the remote control instruction.

18. Autonomous robot (1) according to any of the preceding claims,
wherein the autonomous robot (1) is a gardening tool like a lawn mower or a fertilizing robot, or a cleaning robot like a vacuum cleaner or washing, waxing, polishing or shampooing robot.

19. Remote smart device (8) for operating an autonomous robot (1), such as an autonomous lawn mower,
comprising
- a communication interface (9) for receiving an input image,
- a display (10) for displaying the input image, and
- input means (11) for allowing a user to input or select a remote control instruction,
wherein the communication interface (9) is adapted to transmitting the remote control instruction inputted or selected via the input means (11).

20. System comprising an autonomous robot according to any of the preceding claims 1 to 18, and a remote smart device according to claim 19.

21. Software program product in the form of e.g. a mobile application adapted to be installed on a remote smart device (8) for operating an autonomous robot (1), such as an autonomous lawn mower,
the software program product being adapted to control:
- a communication interface (9) for receiving an input image,
- a display (10) for displaying the input image, and
- input means (11) for allowing a user to input or select a remote control instruction,
wherein the software program product is adapted to control the communication interface (9) so as to transmit the remote control instruction inputted or selected via the input means (11).

22. Method for operating an autonomous robot (1), such as an autonomous lawn mower,
wherein the autonomous robot (1) comprises at least one camera (2), a communication interface (3) and a control unit (4),
the method comprising the following steps:
- the camera (2) obtains at least one input image,
- the communication interface (3) transmits the input image, preferably to a remote smart device, and receiving a remote control instruction, preferably from the remote smart device,
- the control unit (4) controls an operation of the autonomous robot (1) in response to the received remote control instruction.
